# EUROPÄISCHE PATENTSCHRIFT

(11) **EP 2 627 593 B1**
(45) Veröffentlichungstag und Bekanntmachung des Hinweises auf die Patenterteilung: **28.01.2015**
(21) Anmeldenummer: 11767890.4
(22) Anmeldetag: 03.10.2011
(51) Int. Cl.: B65H 39/02, B65H 43/00, B65H 43/02, B65H 33/12, B42C 1/12

(54) **VERFAHREN ZUM BETREIBEN EINER VERARBEITUNGSANLAGE, IN WELCHER PRODUKTEINHEITEN MIT UNTERSCHIEDLICHEN FORMATEN VERARBEITET WERDEN, UND ENTSPRECHENDE VERARBEITUNGSANLAGE**
METHOD FOR OPERATING A PROCESSING SYSTEM, IN WHICH PRODUCT UNITS HAVING DIFFERENT FORMATS ARE PROCESSED, AND CORRESPONDING PROCESSING SYSTEM
PROCÉDÉ SERVANT À FAIRE FONCTIONNER UNE INSTALLATION DE TRAITEMENT DANS LAQUELLE DES UNITÉS DE PRODUIT AYANT DES FORMATS DIFFÉRENTS SONT TRAITÉES, ET INSTALLATION DE TRAITEMENT CORRESPONDANTE

(30) Priorität: 15.10.2010 CH 16932010
(43) Veröffentlichungstag der Anmeldung: 21.08.2013
(73) Patentinhaber: Ferag AG, 8340 Hinwil (CH)
(72) Erfinder: DAX, Roman, CH-8344 Bäretswil (CH)
(74) Vertreter: Frei Patent Attorneys
(86) Internationale Anmeldenummer: PCT/CH2011/000232
(87) Internationale Veröffentlichungsnummer: WO 2012/048435

(56) Entgegenhaltungen:
- DE-A1-102008 034 065
- US-A- 4 168 828
- US-A- 5 809 893

## Beschreibung

Die Erfindung betrifft ein Verfahren zum Betreiben einer Verarbeitungsanlage, in welcher Produkteinheiten mit unterschiedlichen Formaten verarbeitet werden, enthaltend wenigstens eine Verarbeitungseinrichtung, sowie Fördermittel zum Fördern der Produkteinheiten in der Verarbeitungsanlage, ferner enthaltend eine Steuerungseinrichtung zur Steuerung der wenigstens einen Verarbeitungseinrichtung und Verstellmittel zur Anpassung von wenigstens einer Einflussgrösse zur Beeinflussung der Produkteinheiten an der wenigstens einen Verarbeitungseinrichtung an die unterschiedlichenFormate von Produkteinheiten.

Ferner betrifft die Erfindung eine Verarbeitungsanlage zur Verarbeitung von Produkteinheiten mit unterschiedlichen Formaten, enthaltend wenigstens eine Verarbeitungseinrichtung, sowie Fördermittel zum Fördern der Produkteinheiten in der Verarbeitungsanlage, ferner enthaltend eine Steuerungseinrichtung zur Steuerung der wenigstens einen Verarbeitungseinrichtung und Verstellmittel zur Anpassung von wenigstens einer Einflussgrösse zur Beeinflussung der ProduktFormate.

### STAND DER TECHNIK

Es ist bekannt eine Verarbeitungsanlage zu betreiben, in welcher Produkte von unterschiedlichem Format an einer Zusammentrageinrichtung zu einer Produktkollektion zusammengestellt werden, welche dann als Produkteinheit durch die Verarbeitungsanlage gefördert und weiteren Verarbeitungsschritten zugeführt wird. Die Produktkollektionen werden nach ihrer Erstellung in einem getakteten Förderbetrieb einer Verpackungseinrichtung zugeführt, wo sie in eine Verpackungsfolie eingehüllt und nachfolgend eingeschweisst und vereinzelt werden. Die verpackten Produktkollektionen werden anschliessend zu einer Abgabeeinrichtung weiter gefördert. In der Abgabeeinrichtung werden die Produktkollektionen zu Stapeln zusammengefasst und für den Weitertransport zu einer Stapeleinheit gebunden.

Die Produkte, aus welchen solche Kollektionen gebildet werden, haben je nach der zu verarbeitenden Charge jeweils unterschiedliche Formate, so dass auch die Produktkollektionen einer Charge jeweils unterschiedliche maximale Formate aufweisen können. Auf dem Gebiet der Printmedien umfasst eine Produktkollektion z. B. ein oder mehrere Druckereiprodukte. Während eine Produktkollektion an einen bestimmten Empfänger, z. B. an einen Endkunden oder an einen Detailhändler, adressiert ist, entspricht eine Charge von Produktkollektionen gleichen Formats einer geographischen Zone, innerhalb welcher eine Gruppe von Empfängern gleicher Produktkollektionen lokalisiert ist. Da Druckereierzeugnisse in Bezug auf die darin enthaltenen Inhalte regional ausgerichtet sind, werden für die Empfänger einzelner Regionen, d.h. Zonen, jeweils Produktkollektionen gleichen Inhalts zusammengestellt. Für andere Zonen kann dieser Inhalt und somit auch das Format der Produktkollektion verschieden sein, so dass bei einem so genannten Zonenwechsel eine Formatumstellung notwendig werden kann. Es kann sogar vorgesehen sein, dass die Produktkollektionen personalifiziert sind und jede Produktkollektion in Abhängigkeit von der für den einzelnen Adressaten zusammengestellte Kollektion ihr eigenes Format aufweist.

Verschiedene Bauteilanordnungen in den Verarbeitungseinrichtungen, wie seitliche Richtelemente, die Zuführvorrichtung für die Verpackungsmaterialbahn oder die Nahterstellungs- und Trenneinheit der Verpackungseinrichtung müssen jedoch jeweils auf das Format der Produktkollektionen eingestellt werden. Wird nun im Anschluss an eine Charge von Produktkollektionen eines ersten Formates auf eine Charge von Produktkollektionen eines zweiten Formates umgestellt, so müssen entsprechende, formatabhängige Bauteilanordnungen in den Verarbeitungseinrichtungen vorgängig manuell umgestellt werden. Dies bedeutet nach heutigem Stand der Technik, dass die Verarbeitungsanlage nach Abschluss der vorangehenden Charge heruntergefahren und aus Sicherheitsgründen für die manuelle Formatumstellung angehalten werden muss. Die Formateinstellungen an den betreffenden Bauteilanordnungen der stillgelegten Verarbeitungsanlage werden durch entsprechend technisch geschultes Personal manuell vorgenommen. Nach Abschluss der Formatumstellung wird die Verarbeitungsanlage wieder hochgefahren und die Verarbeitung der nachfolgenden Charge von Produktkollektionen des neuen Formates aufgenommen.

Bei den heute üblich hohen Verarbeitungsgeschwindigkeiten bedeutet das Anhalten der Verarbeitungsanlage eine erhebliche Reduktion der Verarbeitungsleistung. Durch das Herunterfahren, Stilllegen und wieder Hochfahren der Anlage wird ein grosses Zeitfenster geöffnet, in welchem die Anlage unproduktiv ist. Wird überdies die Formatumstellung an den betreffenden Bauteilanordnungen durch das Personal nicht umgehend und speditiv ausgeführt oder steht zu wenig technisch geschultes Personal für die Umstellung zur Verfügung, so nimmt der Umstellprozess noch mehr Zeit in Anspruch. Ferner gilt zu bedenken, dass die Anlage aus Sicherheitsgründen erst dann hochgefahren werden kann, wenn die letzte Umstellung vorgenommen worden ist. Dies gilt auch dann, wenn die Umstellung stromaufwärts bereits erfolgt ist und zumindest im stromaufwärtigen Verarbeitungsbereich der Anlage bereits Produkteinheiten der nachfolgenden Charge verarbeitet werden könnten.

Die Veröffentlichungsschrift US 4,168,828 beschreibt eine Anlage zum Zusammenstellen von Zeitungen nach einer bestimmten geographischen Region. Der Betrieb der Anlage kann so gesteuert werden, dass eine Änderung in der Zusammenstellung aufgrund eines Wechsels der geographischen Region ohne Anhalten der Anlage ausgeführt werden kann.

Die Veröffentlichungsschrift DE 10 2008 034 065 A1 beschreibt ein Verfahren für die Fertigung von einzelnen Hardcoverbüchern oder Hardcover-Kleinstauflagen. Bücher unterschiedlichen Formats und unterschiedlicher Ausstattung können direkt nacheinander in einer Buchfertigungsstrasse hergestellt werden. Der Wechsel zwischen den verschiedenen Büchern kann durch einen Leertakt erfolgen.

Die Veröffentlichungsschrift US 5,809,893 beschreibt ein Verfahren zum Ablegen von unterschiedlichen Druckereiprodukten in einem kontinuierlichen Druckverfahren. Gemäss dem Verfahren können Druckprodukte mit unterschiedlichem Format unmittelbar nacheinander produziert werden.

### DARSTELLUNG DER ERFINDUNG

Es ist deshalb Aufgabe der Erfindung, ein Verfahren sowie eine Verarbeitungsanlage der eingangs genannten Art zu schaffen, welche die oben genannten Nachteile behebt, indem einerseits die durch die Umstellung in den Verarbeitungseinrichtung erzwungene unproduktive Zeit vermindert wird und andererseits die Umstellung in den Verarbeitungseinrichtung mit möglichst wenig manuellen Eingriffen erfolgt, so dass entsprechend kostenintensive Arbeitszeit von technischen geschultem Personal eingespart werden kann.

Diese Aufgabe wird durch die Merkmale des Verfahrensanspruchs 1 und des Vorrichtungsanspruchs 13 gelöst. Weitere bevorzugte Ausführungsformen sowie bevorzugte Weiterbildungen der Erfindung, welche in den Ansprüchen definiert ist, gehen aus den abhängigen Patentansprüchen hervor. Merkmale der Verfahrensansprüche sind sinngemäss mit den Vorrichtungsansprüchen kombinierbar und umgekehrt. Unter den Begriff "Verarbeitungsanlage" bzw. "Verarbeitungseinrichtung" sollen definitionsgemäss auch Anlagen bzw. Einrichtungen fallen, in welchen Produkte bzw. Produkteinheiten hergestellt, (weiter-) verarbeitet, bearbeitet, behandelt oder anderweitig in ihrer Struktur oder räumlichen Ausrichtung verändert und durch die Anlage bzw. Einrichtung gefördert werden. Ferner sollen auch Anlagen bzw. Einrichtungen unter die Definition fallen, welche lediglich ein Fördern beinhalten. Ebenso soll der Begriff "Verarbeiten" definitionsgemäss auch eine Herstellen, Behandeln, Bearbeiten, (Weiter-)Verarbeiten oder auch lediglich ein Fördern der Produkte bzw. Produkteinheiten durch die Anlage bzw. Einrichtung umfassen.

Die Verstellmittel zur Anpassung an die neuen Produkteigenschaften werden also über die Steuerungseinrichtung angesteuert, wobei die wenigstens eine Einflussgrösse bei einem Wechsel von Produkteinheiten mit aktuellen Produkteigenschaften auf nachfolgende Produkteinheiten mit nachfolgenden Produkteigenschaften unter Aufrechterhaltung des Förderbetriebes verstellt wird. Hierzu werden insbesondere die folgenden Schritte ausgeführt:
- Zuführen oder Zusammenstellen einer letzten Produkteinheit mit aktuellen bzw. alten Produkteigenschaften in die bzw. in der Verarbeitungsanlage;
- Zuführen oder Zusammenstellen einer ersten Produkteinheit mit nachfolgenden bzw. neuen Produkteigenschaften in die bzw. in der Verarbeitungsanlage;
- Erzeugen einer Fördergutlücke nach der letzten Produkteinheit mit aktuellen Produkteigenschaften unter Fortführung des Förderbetriebes;
- Fortbewegen der Fördergutlücke durch die Verarbeitungseinrichtungen entlang der Verarbeitungslinie;
- Anpassen der Einflussgrösse von wenigstens einer Verarbeitungseinrichtung an die nachfolgenden Produkteigenschaften über die Verstellmittel bei fortgeführtem Förderbetrieb, wobei die Verstellmittel zur Anpassung der wenigstens einen - Einflussgrösse an die nachfolgenden Produkteigenschaften über die Steuerungseinrichtung derart gesteuert werden, dass diese Anpassung dann erfolgt, wenn die Fördergutlücke denjenigen Bereich in der Verarbeitungseinrichtung passiert, in welchem die Einflussgrösse Einfluss auf die passierenden Produkteinheiten nimmt.

Die Fördergutlücke wird zweckmässig zwischen einer letzten Produkteinheit mit aktuellen bzw. alten Produkteigenschaften und einer ersten Produkteinheit mit nachfolgenden bzw. neuen Produkteigenschaften erzeugt.

"Alte Produkteigenschaften" sind die Produkteigenschaften von Produkteinheiten einer ersten Charge, welche z. B. vor einer Umstellung der Einflussgrösse verarbeitet werden, während "neue Produkteigenschaften" die Produkteigenschaften von Produkteinheiten einer zweiten Charge sind, welche nach einer Umstellung der Einflussgrösse verarbeitet werden. Die alten und neuen Produkteigenschaften sind entsprechend verschieden.

Die Verarbeitungsanlage enthält bevorzugt mehrere Verarbeitungseinrichtungen, welche nacheinander in einer Verarbeitungslinie angeordnet sind. Die Fördermittel sind bevorzugt den Verarbeitungseinrichtungen zugeordnet. Die Produkteinheiten können getaktet oder ungetaktet in einem Produktstrom entlang der Verarbeitungslinie durch die Verarbeitungsanlage gefördert werden. Bevorzugt werden die Produkteinheiten getaktet durch die Verarbeitungsanlage gefördert.

Bei der Einflussgrösse zur Beeinflussung der Produkteinheiten handelt es sich bevorzugt um die Geometrie einer Bauteilanordnung in der Verarbeitungseinrichtung. Eine solche Geometrie und die dazugehörige Bauteilanordnung können zum Beispiel Seitenleitelemente und ihre Position relativ zu einem Förderorgan oder den Produkteinheiten, ein Schweissbalken und seine Position relativ zu einem Förderorgan oder den Produkteinheiten, Zuführmittel für die Verpackungsfolie und ihre Position relativ zu einem Förderorgan oder Richtelemente zum Ausrichten von Produkteinheiten und ihre Position relativ zueinander oder zu den Produkteinheiten sein. Die Umstellung bzw. Verstellung der Geometrie einer Bauteilanordnung kann z. B. die Änderung der Position eines Bauteils relativ zu einem anderen Bauteil sein. Die Position kann z. B. durch eine Distanz, einen Winkel oder eine Neigung, definiert sein. Die Umstellung der Einflussgrösse bzw. der Geometrie einer Bauteilanordnung kann auch den Austausch oder die In- bzw. Ausserbetriebnahme bzw. Zuschalten oder Wegschalten von funktionswirksamen Bauteilen, Modulen, Baugruppen, Einrichtungen oder Stationen bedeuten. So kann dies z. B. das Zu- oder Wegschalten einer Zuführstation betreffen.

Die Anpassung einer Einflussgrösse kann auch eine Veränderung der Wirkung eines Bauteils, insbesondere eines Werkzeuges, auf die Produkteinheiten bedeuten. So können z. B. Schweissparameter, wie Schweisstemperatur und Schweissdauer, zum Verschweissen einer verpackten Produkteinheit von den Produkteigenschaften abhängig sein. Im weiteren können Grössen wie die Stärke eines elektrischen Feldes, die Geschwindigkeit mit welcher ein Werkzeug, z. B. ein Schweissbalken, bewegt wird, die Temperatur zur Bearbeitung/Behandlung eines Produktes, eine Vorspannkraft, z. B. der Verpackungsfolie, die Stärke von Druckluft, die Stärke von Blasluft, ein Unter- oder Überdruck Einflussgrössen sein, welche von Produkteigenschaften abhängig sind. Ferner kann auch die Auswahl des einzusetzenden Verpackungsmaterials mit unterschiedlichen Eigenschaften, z. B. Verpackungsmaterial unterschiedlicher Dicke bzw. Reissfestigkeit, in Abhängigkeit der Produkteigenschaften, wie Grösse und Gewicht der Produkteinheit, eine solche Einflussgrösse sein.

Der Begriff "Fördergut" im Zusammenhang mit "Fördergutlücke" bezieht sich hier auf die Produkteinheiten. Der Ausdruck "unter Aufrechterhaltung des Förderbetriebes" bedeutet, dass die den einzelnen Verarbeitungseinrichtungen zugeordneten bzw. diese miteinander verbindenden Fördermittel, wie Bandförderer oder Greiferförderer, etc., in Bewegung bleiben, wobei nicht zwingend Produkteinheiten gefördert werden. Die mit Produkteinheiten bestückten oder leeren Förderorgane der Fördermittel werden also im Förderbetrieb in Bewegung gehalten. Es kann vorgesehen sein, dass die Fördergeschwindigkeit der Verarbeitungsanlage während des Durchlaufs einer Fördergutlücke zu oben genanntem Zwecke bzw. während der Umstellung reduziert und nach Abschluss der Umstellung wieder erhöht wird. Es kann jedoch auch vorgesehen sein, dass die ursprüngliche Fördergeschwindigkeit während der Umstellung beibehalten oder erhöht wird.

Der Begriff Fördergutlücke bezieht sich auf eine Lücke im Produktstrom, in der keine Produkteinheiten gefördert werden. Beginn und Ende der Fördergutlücke werden durch geförderte Produkteinheiten bestimmt. Die Eigenschaften der Produkteinheiten bzw. der von diesen umfassten Produkten vor und nach der Fördergutlücke sind entsprechend bevorzugt unterschiedlich.

Die Fördermittel der Verarbeitungseinrichtungen bleiben also während der Umstellung bzw. dem Durchlaufen der Fördergutlücke durch die Verarbeitungsanlage in Betrieb. Weitere, für den reinen Förderbetrieb nicht notwendige Verarbeitungseinheiten werden jedoch bevorzugt und insbesondere ab einer bestimmten Grösse der Fördergutlücke angehalten. Dies können in der Verpackungseinrichtung z. B. die Vorrichtung zur Zuführung der Verpackungsmaterial-Bahn und die Vorrichtung zur Nahterstellung sein. Ferner können dies auch die Adressiereinheit, die Kontrolleinrichtung oder die Stapelbildungsvorrichtung und die Bindestation der Abgabeeinrichtung sein.

Die Produkteigenschaften können zum Beispiel die Dimension (Länge, Breite, Höhe), bei Druckereierzeugnissen auch Format genannt, die Form, das Gewicht, die Materialbeschaffenheit, die Oberflächeneigenschaften, die Oberflächentextur, die Steifigkeit oder die Anzahl und Art der Produkte in der Produkteinheit sein. All die vorgenannten Eigenschaften können bestimmte Einstellungen an den Verarbeitungseinrichtungen erforderlich machen. Bei einer Änderung einer oder mehrerer dieser Eigenschaften wird entsprechend die Umstellung wenigstens einer Einflussgrösse, insbesondere die Umstellung wenigstens einer Bauteilanordnung in der Verarbeitungsanlage notwendig. Bei Produkten bzw. Produkteinheiten, welche mehrheitlich aus Druckereierzeugnissen bestehen, wird zum Beispiel bei einer Formatänderung eine Formatumstellung in den Verarbeitungseinrichtungen notwendig. Der Begriff "Produkteigenschaften" kann sich auf eine einzige oder eine Mehrzahl von Grössen, wie Länge, Breite, Höhe, Form, Gewicht, etc. beziehen, welche die Eigenschaften eines Produktes bzw. einer Produkteinheit ausmachen.

Selbstverständlich kann die Änderung von Produkteigenschaften die Umstellung mehrere gleicher oder unterschiedlicher Einflussgrössen in einer bestimmten oder in mehreren Verarbeitungseinrichtungen erforderliche machen. Überdies kann die Änderung verschiedener Produkteigenschaften eine Umstellung verschiedener Einflussgrössen erforderlich machen.

In einer bevorzugten Ausführung handelt es sich bei den Produkteigenschaften um Eigenschaften, welche die Produkte bzw. Produkteinheiten bereits bei Eintritt oder am Beginn der Verarbeitungsanlage aufweisen bzw. erhalten. Es kann jedoch auch sein, dass die Produkte bzw. Produkteinheiten gewisse Produkteigenschaften erst in der Verarbeitungsanlage erhalten oder die Produkteigenschaften in der Verarbeitungsanlage verändert werden. Dies kann z. B. durch die Bearbeitung bzw. Verarbeitung oder Behandlung von Produkten bzw. Produkteinheiten geschehen (z.B. Beschneiden von Druckprodukten, Verpacken von Produkten, etc.). Solche neu erworbenen Produkteigenschaften bzw. geänderten Produkteigenschaften können natürlich auch für Einflussgrössen in nachfolgenden Verarbeitungseinrichtungen der Verarbeitungsanlage relevante sein und entsprechend in das erfindungsgemässe Verfahren einfliessen.

Unter den Begriff "Produkteinheiten" fallen unter anderem einzelne Produkte einer bestimmten Dimension bzw. eines bestimmten Formates. Die für die Anlage relevante Dimension bzw. das Format der Produkteinheit definiert sich aus mindestens einer Grösse, wie Breite, Länge oder Höhe. Es kann also sein, dass für die Anlage lediglich eine dieser Grössen relevant ist. In der Regel ist jedoch in einer solchen Anlage wenigstens die Länge und die Breite und häufig auch noch die Höhe der Produkteinheit für den Betrieb der Anlage relevant.

Im Weiteren können die Produkteinheiten auch Kollektionen mehrerer, vorzugsweise aufeinander gelegter Produkte sein, welche untereinander jeweils gleiche oder verschiedene Dimensionen bzw. Formate aufweisen. Weisen die einzelnen Produkte einer Kollektion jeweils unterschiedliche Dimensionen bzw. Formate auf, so definiert sich die Dimension bzw. das Format der Kollektion bzw. der Produkteinheit jeweils bevorzugt an den maximalen Dimensionen der einzelnen Produkte bzw. am Produkt mit der grössten Dimension bzw. dem grössten Format. Die Produkteinheiten können auch Stapel von gleichartigen Produkten sein.

Die Produkte oder einzelne Produkte einer Kollektion sind bevorzugt flächige Produkte, insbesondere flächige und flexible Produkte. Besonders bevorzugt sind die Produkte oder ist wenigstens ein Produkt einer Kollektion ein Druckereierzeugnis, wie z. B. eine Zeitung, eine Zeitschrift, ein Prospekt, eine Broschüre oder ein Buch. Ferner können die Produkte auch Werbebeilagen, Warenproben, CD's, DVD's, Gimmicks und dergleichen sein, welche z. B. einem Hauptprodukt, das ein Druckereierzeugnis wie Zeitung oder Zeitschrift sein kann, zugegeben werden. Die Produkteinheiten werden bevorzugt einzeln und hintereinander und bevorzugt in Förderrichtung voneinander beabstandet durch die Verarbeitungsanlage gefördert. In diesem Fall werden die Produkte bevorzugt getaktet gefördert. Der Produktstrom ist hier folglich taktüberwacht. Die Produkteinheiten können jedoch auch zumindest abschnittsweise in einem Schuppenstrom durch die Verarbeitungsanlage gefördert werden, dies insbesondere dann, wenn die Produkteinheiten ungetaktet gefördert werden.

Die Fördergutlücke entspricht dem leeren Förderbereich zwischen der letzten Produkteinheit mit vorangehenden Produkteigenschaften und der ersten Produkteinheit mit neuen Produkteigenschaften. Die Fördergutlücke kann z. B. als ein von der Fördergeschwindigkeit abhängiges Zeitintervall zwischen dem Passieren der letzten und ersten Produkteinheit erfasst werden. Die Fördergutlücke kann auch als Längenmass zwischen der letzten Produkteinheit mit vorangehenden Produkteigenschaften und der ersten Produkteinheit mit nachfolgenden Produkteigenschaften angegeben werden. Da der vorliegende Produktstrom bevorzugt getaktet durch die Anlage geführt wird, wird die Fördergutlücke jedoch bevorzugt in Anzahl Takten angegeben. Diese Zahl entspricht z. B. der Anzahl leerer Greifer eines Greiferförderers oder der Anzahl leerer Aufnahmefächer einer Zusammentrageinrichtung.

Die Fördergutlücke wird bevorzugt durch Nicht-Zuführen bzw. Nicht-Zusammenstellen wenigstens einer und bevorzugt mehrerer Produkteinheiten erstellt. Die Fördergutlücke kann natürlich auch durch Ausschleusen von wenigstens einer und bevorzugt mehreren Produkteinheiten aus der Verarbeitungsanlage erstellt werden. Hierzu wird wenigstens die letzte Produkteinheit der vorangehenden Charge und/oder wenigstens die erste Produkteinheit der nachfolgenden Charge an geeigneter Stelle ausgeschleust. Dadurch braucht die Produktzufuhr nicht unterbrochen zu werden. Da jedoch das Ausschleusen von Produkteinheiten einen erheblichen Mehraufwand bedeutet, ist diese Variante nicht bevorzugt. Die Fördergutlücke kann jedoch auch mittels einer Kombination durch Nacht-Zuführen bzw. Nicht-Zusammenstellen und Ausschleusen von Produkteinheiten generiert werden. So ist z. B. denkbar, dass eine zu klein geratene Fördergutlücke nachträglich noch durch Ausschleusen von Produkteinheiten vergrössert wird.

Die Steuerungseinrichtung legt die Anzahl Takte der Fördergutlücke in Abhängigkeit von der benötigten Umstellzeit, z. B. Formatumstellzeit, auf die neuen Produkteigenschaften jener Einflussgrösse, insbesondere Bauteilanordnung, bei welcher am meisten Zeit für die Umstellung benötigt wird, und von der Fördergeschwindigkeit fest. Die Fördergutlücke soll mindestens so gross sein, dass die Zeit, welche die Fördergutlücke zum Passieren jenes Bereichs der Verarbeitungseinrichtung benötigt, in welchem die Einflussgrösse Einfluss auf die passierenden Produkteinheiten ausübt, insbesondere zum Passieren der Bauteilanordnung mit der längsten Umstellzeit, wenigstens gleich lang oder länger ist als die genannte Umstellzeit. Die Grösse der Fördergutlücke wird bevorzugt für jede Umstellung neu berechnet, da die Umstellzeiten in Abhängigkeit von der Grössenordnung der Unterschiede zwischen den relevanten Produkteigenschaften, z. B. Formatunterschiede, zwischen der vorangehenden und der nachfolgenden Charge von Produkteinheiten unterschiedlich ausfallen. Selbstverständlich kann auch eine Fördergutlücke mit einer Einheitsgrösse für sämtliche mögliche Umstellungen vorgesehen sein, wobei sich die Grösse der Fördergutlücke an der höchst möglichen Umstellzeit einer Einflussgrösse, z. B. einer Bauteilanordnung, orientiert. In diesem Fall brauchen keine Berechnungen über die Grösse der Fördergutlücke angestellt zu werden. Andererseits führt dies jedoch auch zu einem Effizienzverlust, da für viele Umstellungen die Fördergutlücke zu gross ist und die damit verbundene unproduktive Zeit daher unnötig verlängert wird.

Die Steuerungseinrichtung kann eine zentrale Anlagensteuerung sowie lokale, den Verarbeitungseinrichtungen bzw. den Verstellmitteln zugeordnete Steuerungseinheiten umfassen. Die Anlagensteuerung sowie die Steuerungseinheiten umfassen jeweils bevorzugt eine elektronische Datenverarbeitungseinheit mit Mikroprozessor und Datenspeicher.

Zur Durchführung des Verfahrens werden der Steuerungseinrichtung, z. B. der Anlagensteuerung, vorgängig die entsprechenden Produkteigenschaften, erfindungsgemäss die Formate, der zu verarbeitenden Produkteinheiten bzw. der Produkte einer Produkteinheit übermittelt. Die Produkteigenschaften können z. B. manuell über eine Erfassungseinheit erfasst und der Steuerungseinrichtung zugeführt werden. Der manuellen Erfassung kann z. B. ein Ausmessen der einzelnen Produkte oder der Produkteinheit selbst vorangehen. Wird die Steuerungseinrichtung z. B. mit den Formaten der einzelnen Produkte einer Produkteinheit gespiesen, so ermittelt diese, bzw. eine dieser zugeordnete elektronische Datenverarbeitungseinheit, das Format der Produkteinheit. Es kann auch vorgesehen sein, dass das Format oder andere Eigenschaften der Produkteinheit bzw. der dazugehörigen einzelnen Produkte in einer der Verarbeitungsanlage voran gehenden Einrichtung oder in einer Einrichtung der Verarbeitungsanlage selbst vollautomatisch z. B. über optische Erfassungsmittel, ermittelt werden. Dies kann z. B. in einer Zuführ- bzw. Zusammentrageinrichtung der Verarbeitungsanlage geschehen.

Die Steuerungseinrichtung generiert nun basierend auf den eingespiesenen bzw. selbst ermittelten Produkteigenschaften, wie Formaten, der Produkteinheiten Steuerdaten, welche an die einzelnen Verarbeitungseinrichtungen, insbesondere an Steuerungseinheiten in den Verarbeitungseinrichtungen, übermittelt werden. Dies betrifft jene Verarbeitungseinrichtungen, in welchen eine Umstellung vorzunehmen ist.

Die Verstellmittel in den Verarbeitungseinrichtungen enthalten z. B. Aktoren, wie Stellmotoren, zur mechanischen Verstellung der Geometrie der betreffenden Bauteilanordnung. Die Ansteuerung der Verstellmittel kann auf verschiedene Weise geschehen.

Die Verarbeitungsanlage enthält bevorzugt eine den Verarbeitungseinrichtungen übergeordnete, zentrale Anlagensteuerung, welche dazu ausgelegt ist, Steuerdaten zur Anpassung der wenigstens einen Einflussgrösse, insbesondere der Geometrie einer Bauteilanordnung, an die Eigenschaften der zu verarbeitenden Produkteinheit aufzubereiten und der wenigstens einen Verarbeitungseinrichtung zu übermitteln. Die Anlagensteuerung ist bevorzugt auch dazu ausgelegt, zwecks Umstellung auf die neuen Produkteigenschaften die Fördergutlücke zu erzeugen.

Gemäss einer ersten Ausführungsvariante erzeugt eine zentrale Anlagensteuerung Steuerdaten mit Informationen über Produkteigenschaften in Form von Führungsgrössen, welche direkt als Steuersignale in die Verstellmittel zur Ansteuerung der Aktoren eingespiesen werden. D.h. die Verstellmittel werden direkt über eine zentrale Anlagesteuerung angesteuert. In diesem Fall berechnet die zentrale Anlagensteuerung aus den Daten zu den Produkteigenschaften entsprechende Führungsgrössen für die Verstellmittel der einzelnen Einflussgrössen bzw. Bauteilanordnungen. Ferner wird auch der Zeitpunkt der Umstellung der Einflussgrössen, bzw. der einzelnen Bauteilanordnungen, der Verarbeitungseinrichtungen und somit der Ansteuerungszeitpunkt durch die zentrale Anlagesteuerung ermittelt.

Es kann jedoch auch vorgesehen sein, dass die Verarbeitungseinrichtungen bzw. die dazugehörigen Verstellmittel über eine eigene lokale Steuerungseinheit verfügen, über welche die Verstellmittel bzw. deren Aktoren angesteuert werden. In diesem Fall übermittelt eine zentrale Anlagensteuerung den dezentralen Steuerungseinheiten Steuerungsdaten mit Informationen über die Produkteigenschaften. Die zentrale Anlagensteuerung kann hierzu die entsprechenden Führungsgrössen für die Verstellmittel berechnen und diese an die dazugehörigen lokalen Steuerungseinheiten übermitteln. Es kann auch vorgesehen sein, dass die zentrale Anlagensteuerung lediglich die Ausgangsdaten zur Berechnung der Führungsgrössen, wie z.B. die Formatwerte der Produkt-Einheiten, an die lokalen Steuerungseinheiten übermittelt, welche daraus entsprechende Führungsgrössen für die Verstellmittel berechnen.

Die Ansteuerung einer Zuführeinrichtung bzw. einer Zusammentrageinrichtung und/oder einer Ausschleuseinrichtung zwecks Erzeugung einer Fördergutlücke erfolgt über die Steuerungseinrichtung, welches bevorzugt die zentrale Anlagensteuerung ist. Die besagte Steuerungseinrichtung berechnet insbesondere auch die notwendige Grösse der Fördergutlücke bzw. den notwendigen Zeitbedarf für die Umstellung auf die neuen Produkteigenschaften und daraus die Grösse der Fördergutlücke in Abhängigkeit von der Fördergeschwindigkeit. Je nachdem wie gross die Unterschiede der besagten Produkteigenschaften zwischen den beiden Produkteinheiten sind, ist der Zeitbedarf für die Umstellung verschieden. Die Steuerungseinrichtung errechnet hierzu die Anzahl Takte einer Fördergutlücke. Die Anzahl Takte entspricht hierbei der Anzahl nicht eingespiesenen bzw. nicht zusammengestellten Produkteinheiten. Eine allfällige Änderung, insbesondere Verringerung, der Fördergeschwindigkeit während der Umstellung wird ebenfalls durch die Steuerungseinrichtung, insbesondere die zentrale Anlagensteuerung, vorgenommen. Ferner wird auch bevorzugt der Zeitpunkt des Durchgangs der Fördergutlücke durch die Bereiche, in welchem die einzelnen Einflussgrössen Einfluss auf die Produkteinheiten nimmt, insbesondere durch die Bauteilanordnungen der Verarbeitungseinrichtungen, durch die zentrale Anlagensteuerung ermittelt und zur Ansteuerung der Verstellmittel beispielsweise an die lokale Steuerungseinheit übermittelt. Es kann auch vorgesehen sein, dass die zentrale Anlagensteuerung hierzu die Verstellmittel direkt ansteuert. Ferner kann auch vorgesehen sein, dass die zentrale Anlagesteuerung entsprechende Zeit- und/oder Positionsinformationen über die Fördergutlücke an die lokalen Steuerungseinheiten übermittelt, welche daraus entsprechende Auslösezeitpunkt zur Einleitung der Umstellung an der oder den entsprechenden Bereichen bzw. Bauteilanordnungen berechnet.

In einer Weiterbildung der Erfindung kann vorgesehen sein, dass eine zentrale Anlagensteuerung Steuerdaten mit Informationen über Produkteigenschaften an lokale Steuerungseinheiten übermitteln. Die lokalen Steuerungseinheiten ermitteln aus diesen Daten die Umstellzeiten für die diesen zugeordneten Einflussgrössen bzw. Bauteilanordnungen, welche z. B. von der Grösse des jeweiligen Unterschieds zwischen den Produkteigenschaften, bzw. der Grösse des "Formatsprunges" abhängig sein kann. Die lokalen Steuerungseinheiten teilen die ermittelte Umstellzeit der zentralen Anlagensteuerung, welche hieraus in Abhängigkeit von der Fördergeschwindigkeit die Grösse der Fördergutlücke ermittelt.

In einer besonders bevorzugten Ausführungsform des erfindungsgemässen Verfahrens ist vorgesehen, dass eine zentrale Anlagensteuerung jedem einzelnen Fördertakt und demzufolge dem diesem Fördertakt zugeordneten Förderorgan sowie der mit dem Förderorgan geförderten Produkteinheit ein Datenpaket mit auf den Förderweg gibt. Das Datenpaket ist also einem bestimmten Takt fest zugeordnet und wird vorzugsweise auch taktweise weitergegeben. Hierzu wird in der Anlagensteuerung bevorzugt ein digitales Taktabbild der Verarbeitungsanlage erstellt. Jedem Takt dieses Taktabbildes ist nun ein Datenpaket mit unter anderem den Eigenschaften der mit diesem Takt geförderten Produkteinheiten zugeordnet. Das Datenpaket umfasst beispielsweise die Information, ob der Takt überhaupt ein Produkt mitführt, sowie Informationen über die Produkteigenschaften der einzelnen Produkte einer Produkteinheit oder der Produkteinheit selbst. Dies kann z. B. die Dimension (Länge, Breite, Höhe) bzw. das Format, die Form, das Gewicht, die Materialbeschaffenheit, die Oberflächeneigenschaften, die Oberflächentextur, die Steifigkeit, die Qualität, der Produktzustand, allfällige Beschädigungen, die Anzahl Produkte in der Produkteinheit oder die Adresse, an welche die Produkteinheit ausgeliefert werden soll, sein. Das Datenpaket bewegt sich zusammen mit der Produkteinheit bzw. mit dem dazugehörigen Takt durch die Verarbeitungsanlage und passiert, wie die Produkteinheiten auch, die verschiedenen Verarbeitungseinrichtungen. Das Datenpaket wird z. B. zeitgleich mit dem Takt durch die Verarbeitungsanlage geführt. Die Verarbeitungseinrichtungen, bzw. diesen zugeordnete Steuerungseinheiten, können nun aufgrund der mitgeführten Datenpakete Produkteigenschaften der aktuell geförderten Produkteinheiten abrufen und für steuerungstechnische Aufgaben einsetzen.

Im Rahmen der vorliegenden Erfindung werden nun den einzelnen Takten der Fördergutlücken ebenfalls Datenpakete zugeordnet. Diese enthalten unter anderem Informationen über die Eigenschaften der Produkteinheiten, welche unmittelbar im Anschluss an die Fördergutlücke durch die Verarbeitungsanlage gefördert werden. Bewegt sich nun eine Fördergutlücke durch die Verarbeitungsanlage, so erhalten die Verarbeitungseinrichtungen aus den Datenpaketen, welche z. B. zeitgleich bzw. taktsynchron durch die Verarbeitungsanlage geführt werden, frühzeitig, nämlich z. B. mit dem Eintreffen der Fördergutlücke, die nötigen Informationen zur Durchführung der Umstellung auf die neuen Produkteigenschaften der nachfolgenden Produkteinheiten, wie z. B. Produktformat, in der Verarbeitungseinrichtung. Auf diese Weise muss z. B. die zentrale Anlagensteuerung nicht direkt mit den lokalen Steuerungseinheiten kommunizieren. Es sind nämlich die Informationen in den Datenpaketen, welche zur Umstellung Einflussgrössen bzw. der Geometrie der besagten Bauteilanordnungen zwecks Anpassung auf die neuen Produkteigenschaften führen.

In der Regel sind für Eigenschaftsgrössen, insbesondere für Bauteilanordnungen, deren Geometrie von Produkteigenschaften abhängig ist, Toleranzwerte vorgesehen. Bewegt sich die Änderung der Produkteigenschaften innerhalb dieser Toleranzgrenze, so ist keine Umstellung auf das neue Format notwendig. Die Abweichungen werden in diesem Fall z. B. durch die Auslegung der Bauteilanordnungen selbst abgefangen. Deshalb sind in einer Weiterbildung der Erfindung bevorzugt entsprechende Vergleichs- und Auswertemittel vorgesehen, mittels welchen die Produkteigenschaften, wie das Format, bzw. die, die Produkteigenschaften, bzw. das Format bestimmenden einzelnen Grössen, wie Länge, Breite oder Höhe, einer vorangehenden Charge einer Produkteinheit mit den Produkteigenschaften, bzw. dem Format bzw. den das Format bestimmenden einzelnen Grössen der nachfolgenden Charge von Produkteinheiten verglichen werden. Liegen nun die Unterschiede bzw. die Unterschiede zwischen den einzelnen Grössen innerhalb eines Toleranzbereichs, so wird keine Umstellung vorgenommen. Liegen die Unterschiede ausserhalb des Toleranzbereichs, so wird eine Umstellung eingeleitet. Umfasst z. B. ein Format mehrere Grössen, wie Länge, Breite und Höhe, so können Formatanpassungen auch nur für einzelne ausserhalb des Toleranzbereichs liegenden Grössen vorgenommen werden.

Die Erfindung betrifft auch eine Verarbeitungsanlage zur Verarbeitung von Produkteinheiten mit unterschiedlichen Produkteigenschaften, enthaltend mehrere Verarbeitungseinrichtungen, sowie den Verarbeitungseinrichtungen zugeordnete Fördermittel zum Fördern der Produkteinheiten, ferner enthaltend eine Steuerungseinrichtung zur Steuerung der Verarbeitungsanlage, und enthaltend Verstellmittel zur Anpassung der Einflussgrössen, insbesondere der Geometrie wenigstens einer Bauteilanordnung, von wenigstens einer Verarbeitungseinrichtung an die unterschiedlichen Formate, zur Durchführung des erfindungsgemässen Verfahrens.

Die Steuerungseinrichtung dient unter anderem der Ansteuerung der Verstellmittel während des fortgeführten Förderbetriebes zwecks Anpassung an geänderte Produkteigenschaften. Die Steuerungseinrichtung ist derart ausgelegt, dass die Einflussgrösse bzw. Geometrie der wenigstens einen Bauteilanordnung bei einem Wechsel von aktuellen Produkteigenschaften, z. B. von einem aktuellen Produktformat auf nachfolgende Produkteigenschaften, z. B. auf ein nachfolgendes Produktformat, unter Aufrechterhaltung des Förderbetriebes auf die nachfolgenden Produkteigenschaften verstellbar ist.

Die Verarbeitungsanlage kann z. B. eine als Zuführeinrichtung ausgebildete, erste Verarbeitungseinrichtung enthalten, über welche die Produkteinheiten in die Verarbeitungsanlage eingespiesen werden. Die Zuführeinrichtung kann z. B. als Zusammentrageinrichtung ausgebildet sein, in welcher Produkt-Kollektionen oder Produktstapel aus einzelnen, über entsprechende Zuführeinheiten zugeführten Produkten hergestellt werden. Die Zusammentrageinrichtung enthält z. B. eine Mehrzahl von Zuführstationen, welche jeweils ein Produkt einer bestimmten Kategorie zuführen. Ferner enthält die Zusammentrageinrichtung eine entlang der Zuführstationen angeordnete Fördereinheit mit in einer Förderbahn an den Zuführstationen vorbei führbaren Förderabteilen. Die Förderabteile bilden jeweils eine Auflagefläche zur Aufnahme der Produkte und zur Ausbildung der Produkteinheiten (z. B. Kollektionen oder Stapel) aus. Eine mögliche Ausführungsform einer solche Zusammentrageinrichtung ist z. B. in den Publikationsschriften WO 2008/058 405, EP 2 107 023 und WO 2010/051651 beschrieben. Der Aufbau und das Funktionsprinzip einer solchen bereits bekannten Zusammentrageinrichtung werden daher an dieser Stelle nicht mehr detailliert beschrieben.

Die Verarbeitungsanlage kann ferner eine weitere, als Verpackungseinrichtung ausgebildete Verarbeitungseinrichtung enthalten, in welcher die im Produktstrom zugeführten Produkteinheiten verpackt werden. Die Verpackungseinrichtung kann z. B. eine Einrichtung zum individuellen Verpacken der Produkteinheiten mit einer quasi endlos zugeführten Verpackungsmaterial-Bahn enthalten, wie sie z. B. in der Publikationsschrift WO2005/118400 beschrieben ist. Die Verpackungseinrichtung weist bevorzugt Fördermittel zum Fördern der auf einer Förderunterlage, wie Förderband oder Förderriemen, liegenden Produkteinheiten, eine Zuführeinheit zum Zuführen der flexiblen Verpackungsmaterial-Bahn und eine Verbindungserstellungs- und Trenneinheit zum Verschliessen der um die Produkteinheiten angeordneten Verpackungshülle und zum Trennen der verpackten Produkteinheiten voneinander.

Die Verbindungserstellungseinheit ist insbesondere zum Erstellen von Verpackungsnähten, wie Schweissnähte, ausgelegt. Der Aufbau und das Funktionsprinzip einer solchen bereits bekannten Verpackungseinrichtung werden an dieser Stelle nicht mehr detailliert beschrieben.

Weiters kann die Verarbeitungsanlage auch eine als Abgabeeinrichtung ausgebildete Verarbeitungseinrichtung enthalten, in welcher die im Produktstrom zugeführten, vorzugsweise verpackten, Produkteinheiten zu Gruppen zusammengefasst und für den Abtransport vorbereitet werden. In der Abgabeeinrichtung werden die Produktkollektionen bzw. die Gruppen von Produkteinheiten zu grösseren Gebindeeinheiten, wie Stapel, zusammengefasst und für den Weitertransport vorbereitet. Die Gebindeeinheiten können z. B. für den sicheren Weitertransport gebunden oder anderweitig verpackt werden. Mehrere solcher grösseren Gebindeeinheiten können wiederum auf Paletten zusammengefasst und zu noch grössere Gebindeeinheiten palettiert werden. Die Abgabeeinrichtung enthält bevorzugt eine Stapelstation zur Ausbildung von Stapeln von Produkteinheiten. Ferner enthält die Abgabeeinrichtung bevorzugt auch eine Bindestation zum Binden der Stapel.

Gemäss einer besonders bevorzugten Ausführung der Erfindung enthält die Verarbeitungsanlage in Förder- und Verarbeitungsrichtung betrachtet:
A eine Zusammentrageinrichtung;
B eine mittelbar oder unmittelbar an die Zusammentrageinrichtung anschliessende Verpackungseinrichtung; und
C eine mittelbar oder unmittelbar an die Verpackungseinrichtung anschliessende Abgabeeinrichtung.

Dank dem erfindungsgemässen Verfahren und der erfindungsgemässen Weiterentwicklung der Verarbeitungsanlage kann die Anlage im Förderbetrieb vollautomatisch auf neue Produkteigenschaften, erfindungsgemäss auf ein neues Format umgestellt werden, ohne dass die Anlage für die Umstellung angehalten werden muss. Die Förderung von Produkteinheiten ist lediglich im Bereich der Fördergutlücke unterbrochen. Da die Länge der Fördergutlücke und somit die Länge des Förderunterbruchs auf die für die Umstellung benötigte Zeit abgestimmt und entsprechend optimiert ist, entspricht dies dem kürzest möglichen Unterbruch für eine Umstellung auf neue Produkteigenschaften.

Ein weiterer Vorteil liegt darin, dass mit der Aufnahme der Produktverarbeitung nicht wie bis anhin bis zur letzten Umstellung in der Verarbeitungsanlage gewartet werden muss. Die Produktverarbeitung kann nämlich erfindungsgemäss in jenen stromaufwärts liegenden Anlageabschnitten, welche die Fördergutlücke bereits passiert hat, bereits wieder aufgenommen werden, und dies bevor die Umstellung in den stromabwärts liegenden Anlageabschnitten abgeschlossen ist.

Dank der vorliegenden Erfindung kann also die Produktivität der Verarbeitungsanlagen erheblich erhöht werden. Je mehr Umstellungen, bzw. Formatwechsel, vorkommen, bzw. je kleiner die durch bestimmte Produkteigenschaften, bzw. durch ein bestimmtes Format definierten Produkt-Chargen sind, desto stärker wirkt sich die Effizienzsteigerung aus. Da die heutigen Druckereiprodukte, bzw. die aus diesen zusammengestellten Kollektionen, immer kundenspezifischer ausgestaltet werden müssen, wird mit den damit verbundenen häufigen Umstellungen bzw. Formatwechseln schnell die Leistungsgrenze solcher Verarbeitungsanlagen erreicht. Mit der erfindungsgemässen Vorrichtung sowie dem dazugehörigen Verfahren, wird die Leistung der Verarbeitungsanlage erhöht, ohne dass besondere und kostenintensive Kapazitätserweiterungen an bestehenden Anlagen durchgeführt oder alte Anlagen durch neue Anlagen ersetzt oder zusätzliche, neue Anlagen angeschafft werden müssen. Vorliegende Erfindung weist ferner auch den Vorteil auf, dass bestehende Anlagen zur Durchführung des erfindungsgemässen Verfahrens mit relativ geringem Aufwand umgerüstet werden können.

Der Gegenstand vorliegender Erfindung soll sich nicht nur auf Verarbeitungsanlagen auf dem Gebiet der Druckereierzeugnisse beschränken, sondern findet Anwendung in sämtlichen Bereichen, in welchen Stückgut in einem Stückgutstrom, insbesondere in einem getakteten Stückgutsstrom, durch eine Verarbeitungsanlage geführt wird. Dies umfasst z. B. den Bereich der Lebensmittelverarbeitung, der Brief- und Paketverarbeitung, und generell den Logistikbereich.

### WEGE ZUR AUSFÜHRUNG DER ERFINDUNG

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1:: eine Draufsicht einer erfindungsgemässen Verarbeitungsanlage;
- Figur 2a-b:: eine aus einzelnen Produkten unterschiedlichen Formats zusammengestellte Produkteinheit;
- Figur 3a-f:: eine Darstellung der sich durch eine Verarbeitungsanlage bewegenden Fördergutlücke;
- Figur 4:: eine Seitenansicht eines ausschnittsweise gezeigten Greiferförderers.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

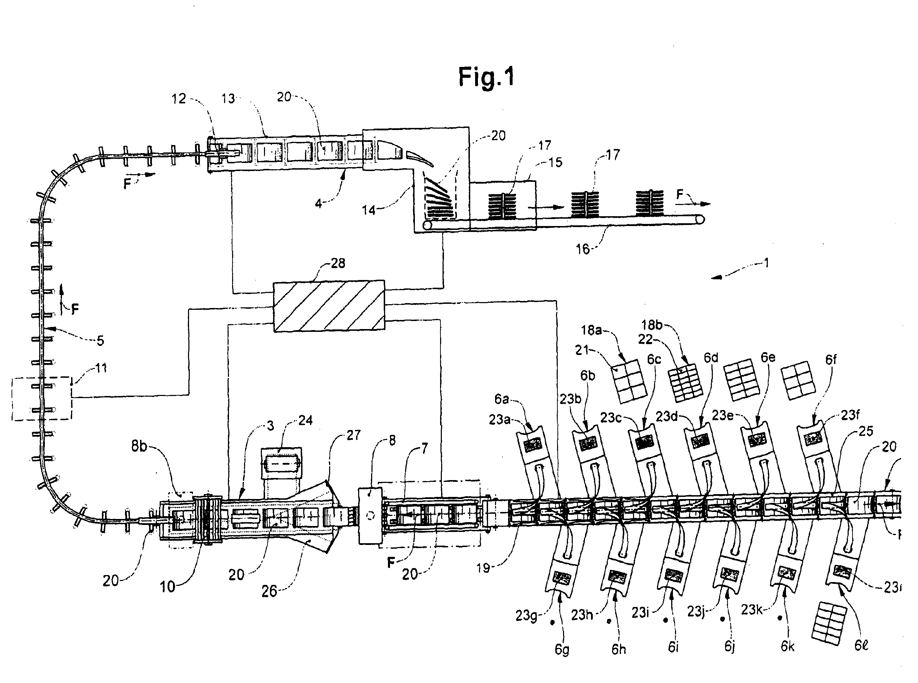

Die in Figur 1 gezeigte Verarbeitungsanlage 1 dient der Verarbeitung von flächigen, flexiblen Druckereiprodukten. Die Anlage 1 enthält hierzu eine Zusammentrageinrichtung 2 zum Zusammentragen der Druckereiprodukte zu Kollektionen. Die Zusammentrageinrichtung enthält Fördermittel mit einer Mehrzahl von hintereinander entlang einer Förderbahn verfahrbaren Förderabteilen 25. Die Förderabteile 25 werden an Zuführeinheiten 6a..6k, hier beispielhaft beidseitig angeordnet und deren Zwölf in der Anzahl, vorbei geführt. Über die Zuführeinheiten 6a...6h werden einzelne Produkte von einem Stapel 23a...23h zwecks Erstellung einer Kollektion den an diesen vorbei geführten Förderabteilen 25 übergeben. Die Zuführeinheiten 6a...6h werden gemäss dieser Ausführungsform manuell mit Produkten ab Paletten 18a..b beschickt. Der Einfachheit halber sind nicht sämtliche Paletten mit Produkten dargestellt. Jedes Förderabteil 25 weist eine Auflagefläche auf, auf welcher die von den Zuführeinheiten 6a..1 zugeführten Produkte 21, 22 abgelegt und zu einer Kollektion 20 zusammengestellt werden. Die Zusammentrageinrichtung 2 enthält überdies eine Seitenrichteinheit 19 mit beidseitig von den Förderabteilen 25 angeordneten Seitenrichtmittel zum seitlichen Ausrichten der auf den Förderabteilen 25 abgelegten Produkte 22, 21. Es ist natürlich auch möglich, mit der beschriebenen Einrichtung eine Sequenz einzelner Produkte oder Stapel von gleichen Produkten zu erzeugen.

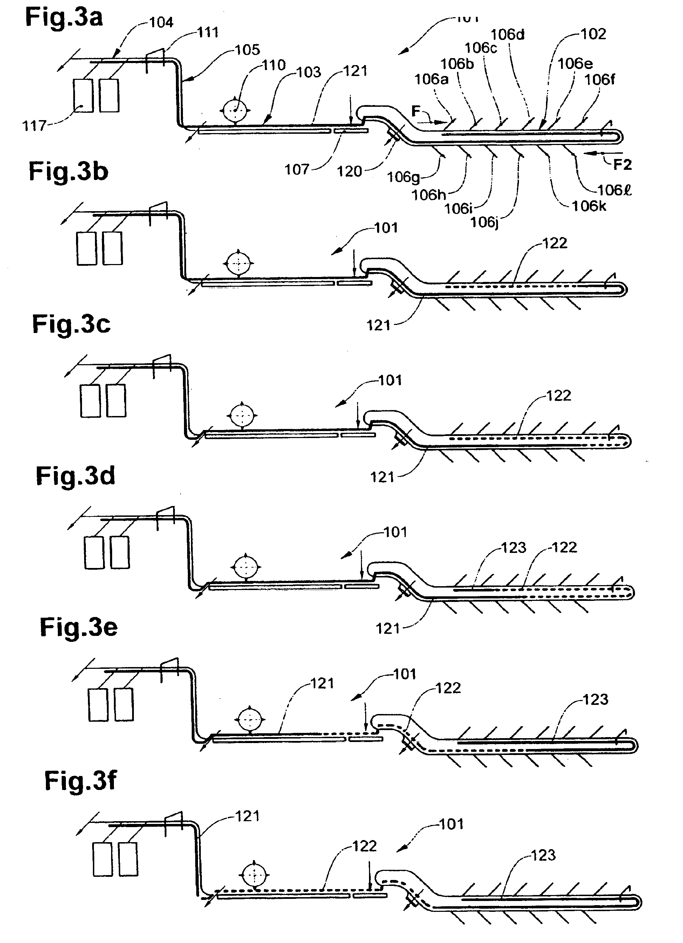

Die Förderabteile 25 sind hier in einer geschlossenen Umlaufbahn geführt, wobei die Förderabteile 25 in einem oberen Bahnabschnitt in eine erste Förderrichtung F1 transportiert und mit Produkten 21, 22 von den Zuführeinheiten beschickt werden. Entlang eines unteren Bahnabschnittes (nicht sichtbar in Figur 1, siehe Figur 3a-f) werden die Förderabteile 25 in einer der ersten Förderrichtung F1 entgegen gerichteten zweiten Förderrichtung F2 zurückgeführt.

An die Zusammentrageinrichtung 2 schliesst in Verarbeitungsrichtung betrachtet eine Verpackungseinrichtung 3 an. Die Kollektionen bzw. Produkteinheiten 20 werden an dem der Verpackungseinrichtung 3 zugewandten Kopfende der Verpackungseinrichtung übergeben. Zwischen der Zusammentrageinrichtung 2 und der Verpackungseinrichtung 3 ist im Anschluss an die Zusammentrageinrichtung 2 eine Positionierungseinrichtung 7 zum Positionieren und Eintakten der Produkteinheiten 20 vorgesehen. In der Positionierungseinrichtung 7 werden die Produkteinheiten 20 vor Eintritt in die Verpackungseinrichtung 3 seitlich und in definierten Abständen zueinander ausgerichtet. Die Positionierungseinrichtung 7 kann z. B. ein umlaufendes Nockenband mit vor- und/oder nachlaufenden Nocken umfassen, wobei die Produkteinheiten 20 an den umlaufenden Nocken ausgerichtet werden.

Ferner ist zwischen der Positionierungseinrichtung 7 und der Verpackungseinrichtung 3 bzw. am Anfang der Verpackungseinrichtung 3 eine Adressiereinheit 8 angeordnet. Die Adressiereinheit 8b kann jedoch auch im Anschluss an die bzw. am Ende der Verpackungseinrichtung 3 angeordnet sein. Die Adressiereinheit 8, 8b ist hierzu als auswechselbares Modul ausgebildet, welches wahlweise vor oder nach bzw. am Anfang oder Ende der Verpackungseinrichtung 3 an die Verarbeitungsanlage gekoppelt werden kann. Selbstverständlich kann das Adressmodul auch Teil der Verpackungseinrichtung sein 3. In der Adressiereinheit 8 werden die Produkteinheiten 20 mit einer Adresse versehen, welche z. B. über entsprechende Beschriftungsmittel direkt auf ein aussen liegendes Produkt aufgetragen wird, oder welche auf einem separaten Deckblatt oder Etikett aufgetragen der Produkteinheit 20 zugeführt wird. Wird die Adresse jedoch auf die Verpackungshülle aufgebracht oder über ein Etikett auf die Verpackungshülle aufgeklebt, so kann die Adressiereinheit auch im Anschluss an die Verpackungseinheit angeordnet sein.

Im Anschluss an die Adressiereinheit 8, 8b werden die Produkteinheiten 20 über entsprechende Fördermittel in Reihe hintereinander und voneinander beabstandet in die Verpackungseinrichtung 3 geführt, wo diese mit einer quasi endlos zugeführten Verpackungsmaterial-Bahn 26 umhüllt werden. Die Verpackungseinrichtung 3 enthält hierzu Mittel 24 zur Zuführung einer Verpackungsmaterial-Bahn 26 sowie zum Fördern der Verpackungsmaterial-Bahn 26 zusammen mit den in Reihe auf einer Förderunterlage geförderten Produkteinheiten 20. Des Weiteren enthält die Verpackungseinrichtung 3 eine Vorrichtung 27 zum Umlegen der Verpackungsmaterial-Bahn und vollständigen Umhüllen der Produkteinheiten 20. Es können natürlich auch mehrere Verpackungsmaterial-Bahnen zugeführt werden, wobei in diesem Fall eine Vorrichtung 27 zum Umlegen der Verpackungsmaterial-Bahn 26 unter Umständen nicht mehr notwendig ist. In einer nachfolgenden Verbindungserstellungs- und Trenneinheit 10 der Verpackungseinrichtung 3 wird die um die Produkteinheit 20 angeordnete Verpackungshülle über Längs- und Querverbindungen, welche z. B. als Nähte, insbesondere als Schweissnähte, ausgebildet sein können, verschlossen. Anschliessend werden die verpackten Produkteinheiten 20 entlang der Querverbindungen voneinander getrennt. Die Verpackungsmaterial-Bahn 26 ist bevorzugt eine Kunststofffolie und die Verpackungsnähte sind bevorzugt Schweissnähte.

Nachdem die verpackten Produkteinheiten 20 die Verpackungseinrichtung 3 verlassen haben, werden diese mittels einer, als Greiferförderer ausgebildete Zwischenfördereinrichtung 5 einer Abgabeeinrichtung 4 zugeführt. Zwischen der Verpackungseinrichtung 3 und der Abgabeeinrichtung 4 ist im Bereich der Zwischenfördereinrichtung 5 überdies eine Kontrolleinrichtung 11 vorgesehen, an welcher die vorbei geförderten, verpackten Produkteinheiten 20 auf ihre korrekte Lage und Ausrichtung im Greifer überprüft werden.

Mit Eintritt in die Abgabeeinrichtung 4 werden die verpackten Produkteinheiten 20 an einer Abgabestation 12 vom Greiferförderer an eine Förderfläche 13, z. B. ein Förderband, der Abgabeeinrichtung 4 übergeben, auf welcher diese in einer Reihe und einzeln hintereinander einer Stapelbildungsvorrichtung 14 zugeführt werden. In der Stapelbildungsvorrichtung 14 werden die verpackten Produkteinheiten 20 zu Produktstapeln 17 zusammengefasst und in einer nachfolgenden Bindestation 15 gebunden und anschliessend für den Abtransport vorbereitet. Die so gebildeten Produktstapel 17 werden über eine Wegfördervorrichtung 16 von der Abgabeeinrichtung 4 weg befördert.

Die Verarbeitungsanlage 1 weist eine zentrale Anlagensteuerung 28 auf, über welche die einzelnen Verarbeitungseinrichtungen und Verarbeitungseinheiten, bzw. deren Steuerungseinheiten, mittels Kommunikationsleitungen ansteuerbar sind.

Bei einem Formatwechsel sind nun unter Umständen Umstellungen von Bauteilanordnungen notwendig in:
- der Seitenrichteinheit 19, in welcher die durch die Breite der Produkteinheiten definierte Position der Seitenrichtelemente eingestellt werden muss;
- der Eintakteinheit 7, in welcher die durch die Länge der Produkteinheiten definierte Lage der Richtnocken eingestellt werden muss;
- der Vorrichtung 27 zum Umlegen der Verpackungsmaterial-Bahn, in welcher der durch die Breite und Höhe der Produkteinheiten definierte Umlegevorgang eingestellt werden muss;
- der Verbindungserstellungs- und Trennvorrichtung 10, in welcher die durch die Breite der Produkteinheiten definierte Lage der Längsverbindung sowie die durch die Länge der Produkteinheiten 20 definierten Abstände und Lage der Querverbindungen und der Trennstellen eingestellt werden müssen;
- der Kontrolleinrichtung 11, in welcher die von der Breite und Länge der Produkteinheiten abhängige Sensoreinstellung geändert werden muss;
- der Stapelbildungsvorrichtung 14, in welcher z. B. die Seitenführungen zur Stapelbildung geändert werden müssen.

Die vorgenannte Auflistung ist lediglich beispielhaft. Weitere Einrichtung in der Verarbeitungsanlage, wie Kontrolleinrichtungen oder Stationen in der Abgabeeinrichten, wie Stapelvorrichtung oder Bindestation können ebenfalls einer Formatumstellung unterworfen sein.

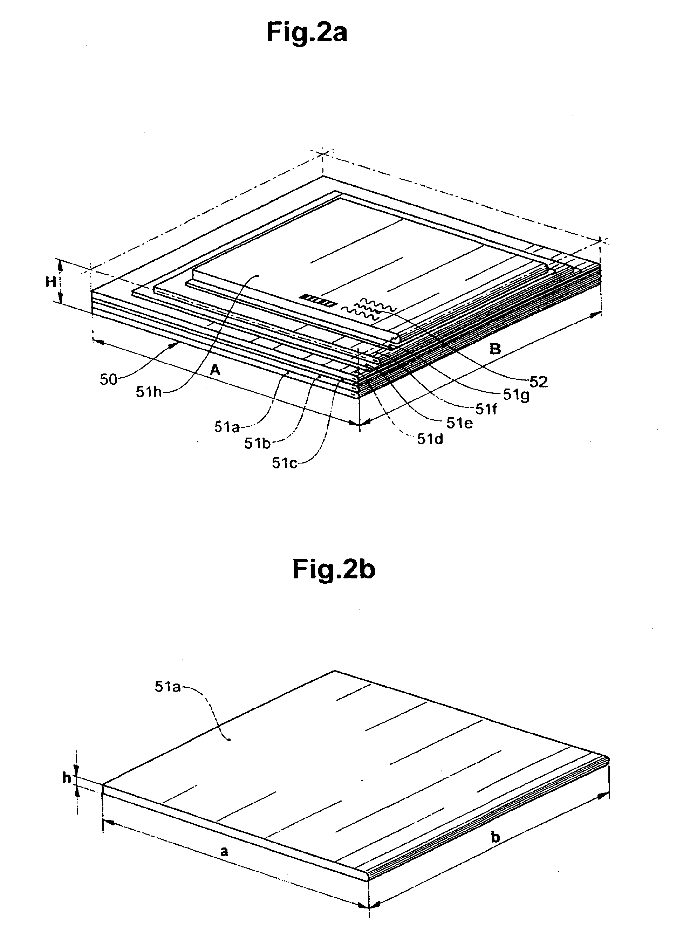

Die Produkteinheit 50 gemäss Figur 2a besteht aus einer Kollektion von beispielhaft acht aufeinander liegenden Druckereiprodukten 51 a..h von unterschiedlichem Format. Das Format eines einzelnen Produktes definiert sich aus einer Länge a, Breite b und Höhe h. Das Format der Produkteinheit 50 definiert sich nun in Bezug auf dessen Länge A und Breite B anhand des Produktes 51 a (siehe Figur 2b) mit der grössten Flächenausdehnung (Länge a, Breite b) sowie in Bezug auf die Höhe H anhand der Gesamthöhe der aufeinander gelegten Produkte 51a...h. Es kann sein, dass ein erstes Produkt eine maximale Länge a und ein zweites Produkt eine maximale Breite b aufweist (nicht gezeigt). In diesem Fall definiert sich das Format der Produkteinheit 50 in Bezug auf die Länge A und Breite B anhand der maximalen Länge des ersten und der maximalen Breite des zweiten Produktes. Ein aussen liegendes Produkt 51 h kann die Adresse 52 des Empfängers oder ein Barcode tragen.

Die Figuren 3a - 3f zeigen eine äusserst schematische Darstellung einer Verarbeitungsanlage 101, wie sie beispielsweise in Figur 1 etwas konkreter dargestellt ist. In den Figuren 3a - 3f liegt der Fokus der Darstellung auf einer sich durch die Verarbeitungsanlage bewegenden Fördergutlücke. Die einzelnen Verarbeitungseinrichtungen der Anlage 101 sind daher nur ganz schematisch dargestellt. Für weitere Ausführungen wird auf die Figur 1 verwiesen, welche eine mögliche Ausführungsform der in diesen Figuren abstrahiert dargestellten Verarbeitungsanlage zeigt. Die in den Figuren 3a - 3f gezeigte Verarbeitungsanlage 101 umfasst eine Zusammentrageinrichtung 102 mit einer Vielzahl von Zuführeinheiten 106a..1, eine in Verarbeitungsrichtung der Zusammentrageinrichtung 102 nachgeordnete Verpackungseinrichtung 103 mit einer Verbindungserstellungs- und Trennvorrichtung 110, sowie eine zwischen der Zusammentrageinrichtung 102 und der Verpackungseinrichtung 103 liegende Positionierungseinrichtung 107. Im Weiteren enthält die Verarbeitungsanlage 101 eine der Verpackungseinrichtung 103 nachgeordnete Zwischenfördereinrichtung 105, welche die verpackten Produkteinheiten zu einer Abgabeeinrichtung 104 hin fördert. In Anschluss an die Abgabeeinrichtung 104 ist eine Stapelbildungsvorrichtung 114 angeordnet, in welcher aus Produkteinheiten Stapel erstellt werden.

Die Zusammentrageinrichtung 102 enthält ferner eine Ausschleusstation 120 (welche übrigens auch in der Zusammentrageinrichtung gemäss Figur 1 vorhanden, jedoch nicht gezeigt ist). Ist die Fördergutlücke 122 nun zu kurz geraten, so können an der Ausschleusstation 120 unmittelbar vor oder nach der Fördergutlücke 122 anschliessende Produkteinheiten noch zusätzlich ausgeschleust werden.

Zur Einleitung einer Formatumstellung wird nun in der Zusammentrageinrichtung 102 eine Fördergutlücke 122 von mehreren, z. B. 70 Takten, erzeugt. Dies geschieht, indem über die entsprechende Anzahl Takte hinweg keine Produkte von den Zuführeinheiten zugeführt und entsprechend keine Produkteinheiten zusammengetragen werden. Hat die Fördergutlücke ihre zur Umstellung der betroffenen Bauteilanordnungen notwendige Grösse erreicht, wird mit der Zufuhr von Produkten von den Zuführeinheiten zwecks Erstellung von Produkteinheiten vom neuen Format begonnen. Die Fördergutlücke 122 wandert nun in Fördergeschwindigkeit durch die Verarbeitungsanlage 101. Sobald die Fördergutlücke 122 eine Bauteilanordnung erreicht, in welcher eine Formatumstellung vorgenommen werden muss, wird diese eingeleitet. Für die Formatumstellung steht hierzu der Zeitraum zur Verfügung, welcher die Fördergutlücke benötigt, um die betreffende Bauteilanordnung zu durchqueren. Dadurch wird sichergestellt, dass die Geometrie der Bauteilanordnung bzw. die Position dazugehöriger Komponenten nur in einer Phase verändert wird, in welcher keine Produkteinheiten an der Bauteilanordnung bzw. an den betreffenden Komponenten vorbei geführt werden. Nach Abschluss der Formatumstellungen verlässt die Fördergutlücke die Verarbeitungsanlage 101 über die Abgabeeinrichtung 104. Nachdem die Fördergutlücke 122 eine Bauteilanordnung bzw. eine Verarbeitungseinrichtung verlassen hat, wird in diesen Bereichen der Anlage die Verarbeitung der Produkteinheiten vom neuen Format, welche der Fördergutlücke 122 nachfolgen, aufgenommen.

Da sich die Fördergutlücke 122 mit einer bestimmten Fördergeschwindigkeit kontinuierlich durch die Verarbeitungsanlage 101 fortbewegt, kann es möglich sein, dass in der Zusammentrageinrichtung 102 bereits die Produkteinheiten vom neuen Format zusammengetragen werden, d.h. ein Produktstrom 123 von Produkteinheiten vom neuen Format generiert wird, während in einer nachgeordneten Bauteilanordnung einer Verarbeitungseinrichtung, welche gerade von der Fördergutlücke passiert wird, die Formatumstellung noch im Gange ist, und in einer, der erstgenannten Bauteilanordnung nachgeordneten, weiteren Bauteilanordnung, welche die Fördergutlücke 122 noch nicht erreicht hat, die Formatumstellung noch nicht stattgefunden hat bzw. immer noch Produkteinheiten vom vorangehenden Produktstrom 121 vom alten Format verarbeitet werden.

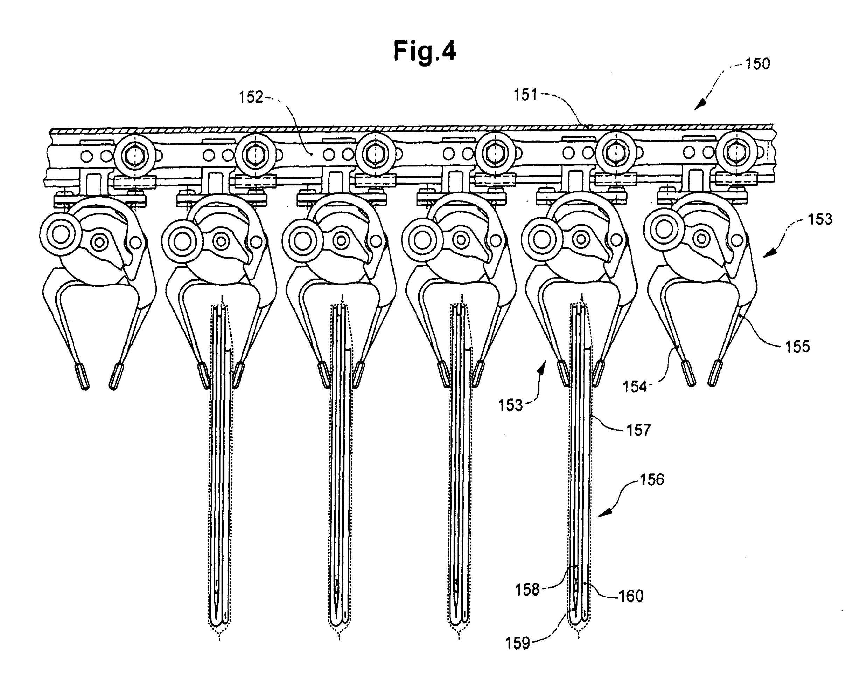

Die Figur 4 zeigt eine Seitenansicht eines ausschnittsweise gezeigten Greiferförderers 150, welcher z. B. eine Zwischenfördereinrichtung 5, 105 sein kann. Der Greiferförderer 150 enthält eine in einer Führungsschiene 151 geführte Förderkette 152, an welcher in regelmässigen Abständen Transportgreifer 153 mit jeweils einem ersten und zweiten Greiferschenkel 154, 155 angeordnet sind. Jeder Transportgreifer 153 entspricht jeweils einem Takt. Einzelne Transportgreifer 153 halten in hängender Position folierte, d.h. in einer Kunststoffverpackungsfolie 157 verpackte Produkteinheiten 156. Die Produkteinheiten 156 sind Kollektionen aus einzelnen Produkten 158, 159, 160. Bei der vorliegender Kollektion ist ein erstes Produkt 158 in ein zweites Produkt 159, welches beispielsweise das Hauptprodukt ist, eingesteckt. Ein drittes Produkt 160 liegt dem zweiten Produkt 159 an. Alle drei Produkte 158, 159, 160 dieser Kollektion weisen unterschiedliche Eigenschaften, insbesondere Formate, auf.

## Patentansprüche

1. Verfahren zum Betreiben einer Verarbeitungsanlage (1, 101), in welcher Produkteinheiten (20) mit unterschiedlichen Formaten verarbeitet werden, enthaltend wenigstens eine Verarbeitungseinrichtung (2, 102; 3, 103; 4, 104; 5, 105; 6, 106), sowie Fördermittel zum Fördern der Produkteinheiten (20) in der Verarbeitungsanlage (1, 101), ferner enthaltend eine Steuerungseinrichtung (28) zur Steuerung der wenigstens einen Verarbeitungseinrichtung (2, 102; 3, 103; 4, 104; 5, 105; 6, 106) und Verstellmittel zur Anpassung von wenigstens einer Einflussgrösse zur Beeinflussung der Produkteinheiten (20) an der wenigstens einen Verarbeitungseinrichtung (2, 102; 3, 103; 4, 104; 5, 105; 6, 106) an die unterschiedlichen Formate von Produkteinheiten (20),
wobei
eine Anpassung der wenigstens einen Einflussgrösse an ein neues Format einer nachfolgenden Produkteinheit (20) über die Verstellmittel bei fortgeführtem Förderbetrieb geschieht,
wobei die Steuerungseinrichtung (28) eine Fördergutlücke (122) erzeugt, welche durch die Verarbeitungsanlage (1, 101) bewegt wird,
wobei die Verstellmittel über die Steuerungseinrichtung (28) derart gesteuert werden, dass die Anpassung der wenigstens einen Einflussgrösse dann erfolgt, wenn die Fördergutlücke (122) denjenigen Bereich in der Verarbeitungseinrichtung passiert, in welchem die Einflussgrösse Einfluss auf die passierenden Produkteinheiten (20) ausübt,
**dadurch gekennzeichnet, dass**
die Grösse der Fördergutlücke (122) durch die Steuerungseinrichtung (28) in Abhängigkeit von der Fördergeschwindigkeit und der benötigten Umstellzeit jener Einflussgrösse bestimmt wird, bei welcher am meisten Zeit für die Anpassung auf das neue Format benötigt wird, so dass die Zeit zum Passieren der Fördergutlücke (122) durch den betreffenden Bereich, in welchem diese Einflussgrösse Einfluss auf die Produkteinheiten ausübt, wenigstens gleich lang oder länger als die dazugehörige Umstellzeit ist.

2. Verfahren gemäss Anspruch 1, **dadurch gekennzeichnet, dass** die wenigstens eine Einflussgrösse zur Beeinflussung der Produkteinheiten unter Ausführung der folgenden Schritte auf das Format einer nachfolgenden Produkteinheit angepasst wird:
- Zuführen oder Zusammenstellen einer letzten Produkteinheit (20) mit einem alten Format in die bzw. in der Verarbeitungsanlage (1, 101);
- Zuführen oder Zusammenstellen einer ersten Produkteinheit (20) mit einem neuen Format in die bzw. in der Verarbeitungsanlage (1, 101);
- Erzeugen einer Fördergutlücke (122) nach der letzten Produkteinheit (20);
- Fortbewegen der Fördergutlücke (122) durch die Verarbeitungsanlage (1, 101);
- Anpassen der wenigstens einen Einflussgrösse zur Beeinflussung der Produkteinheiten an das neue Format der nachfolgenden, ersten Produkteinheit über die Verstellmittel bei fortgeführtem Förderbetrieb.

3. Verfahren gemäss Anspruch 1 oder 2, **dadurch gekennzeichnet, dass** die Fördergutlücke durch Nicht-Zuführen bzw. Nicht-Zusammenstellen wenigstens einer Produkteinheit (20) und/oder durch Ausschleusen von wenigstens einer Produkteinheit aus der Verarbeitungsanlage (1, 101) erstellt wird.

4. Verfahren gemäss einem der Ansprüche 1 bis 3, **dadurch gekennzeichnet, dass** der Steuerungseinrichtung (28) vor der Umstellung Informationen über die Formate der zu verarbeitenden Produkte von Produkteinheiten der das Format der Produkteinheiten (20), übermittelt werden.

5. Verfahren gemäss einem der Ansprüche 1 bis 4, **dadurch gekennzeichnet, dass** die Steuerungseinrichtung (28) basierend auf den übermittelten Formaten Steuerdaten generiert, welche an die wenigstens eine Verarbeitungseinrichtung (2, 102; 3, 103; 4, 104; 5, 105), insbesondere an eine Steuerungseinheit der Verarbeitungseinrichtung (2, 102; 3, 103; 4, 104; 5, 105) zwecks Umstellung auf das neue Format übermittelt werden.

6. Verfahren gemäss einem der Ansprüche 1 bis 5, **dadurch gekennzeichnet, dass** eine zentrale Anlagensteuerung der Steuerungseinrichtung (28) wenigstens einem Takt der Fördergutlücke (122) ein Datenpaket zuordnet, welches mit diesem Takt durch die Verarbeitungsanlage zu einer Steuerungseinheit der wenigstens einen Verarbeitungseinrichtung (2, 102; 3, 103; 4, 104; 5, 105) geführt wird, und das Datenpaket auf dem Format der Produkteinheiten basierende Steuerdaten bzw. Informationen enthält, und die Steuerungseinheit die Steuerdaten bzw. Informationen des Datenpakets zur Umstellung auf das neue Format verwendet.

7. Verfahren gemäss einem der Ansprüche 4 bis 6, **dadurch gekennzeichnet, dass** die Steuerdaten bzw. Informationen den Führungsgrössen für die Verstellmittel oder den Ausgangs grössen, nämlich den Formaten der Produkteinheiten (20) oder der Produkte von Produkteinheiten, zur Berechnung der Führungsgrössen entsprechen.

8. Verfahren gemäss einem der Ansprüche 1 bis 7, **dadurch gekennzeichnet, dass** die Produkt-Einheit (20) eine Kollektion aus verschiedenen Produkten unterschiedlichen Formates ist, wobei das Format der Kollektion durch seine maximale Breite, maximale Länge und die maximale Höhe definiert ist, und das Format der Kollektion entweder aus den Formaten der einzelnen Produkte errechnet oder durch Messen der Formate der Kollektion ermittelt wird oder eine Kombination davon.

9. Verfahren gemäss einem der Ansprüche 1 bis 8, **dadurch gekennzeichnet, dass** der Differenzwert zwischen dem vorangehenden und dem nachfolgenden Format ermittelt und mit einem Toleranzbereich für das Format verglichen wird, wobei für das Format:
a. keine Anpassung der wenigstens einen Einflussgrösse in der Verarbeitungsanlage (1, 101) vorgenommen wird, falls der Differenzwert innerhalb des Toleranzbereichs liegt; und
b. eine Anpassung der wenigstens einen Einflussgrösse auf das neue Format in der Verarbeitungsanlage (1, 101) vorgenommen wird, falls der Differenzwert ausserhalb des Toleranzbereichs liegt.

10. Verfahren gemäss einem der Ansprüche 1 bis 9, **dadurch gekennzeichnet, dass** während der Anpassung der wenigstens einen Einflussgrösse auf das neue Format in der Verarbeitungsanlage (1, 101) die Fördergeschwindigkeit gegenüber der Sollgeschwindigkeit vor und nach der Umstellung verändert, insbesondere reduziert wird.

11. Verfahren gemäss einem der Ansprüche 1 bis 10, **gekennzeichnet durch** folgende Schritte:
- Zusammentragen von Produkteinheiten (20) aus einzelnen Produkten in einer Zusammentrageinrichtung (2, 102);
- Weiterfördern der Produkteinheiten (20) zu einer Verpackungseinrichtung (3, 103) und Verpacken der Produkteinheiten (3);
- Weiterfördern der verpackten Produkteinheiten (20) und Durchführen einer Qualitätskontrolle in einer Kontrolleinrichtung (11);
- Weiterfördern der kontrollierten Produkteinheiten (20) an eine Abgabeeinrichtung (12) und Erstellen einer Gebindeeinheit aus mehreren Produkteinheiten (20).

12. Verfahren gemäss einem der Ansprüche 1 bis 11, **dadurch gekennzeichnet, dass** die Einflussgrösse zur Beeinflussung der Produkteinheiten der Geometrie einer Bauteilanordnung in der Verarbeitungseinrichtung entspricht, und die Verstellmittel über die Steuerungseinrichtung (28) derart gesteuert werden, dass die Anpassung der Geometrie der Bauteilanordnung während dem Passieren der Fördergutlücke durch die betreffende Bauteilanordnung erfolgt.

13. Verarbeitungsanlage (1, 101) zur Verarbeitung von Produkteinheiten (20) mit unterschiedlichen Formaten, enthaltend wenigstens eine Verarbeitungseinrichtung (2, 102; 3, 103; 4, 104; 5, 105; 6, 106), sowie Fördermittel zum Fördern der Produkteinheiten (20) in der Verarbeitungsanlage (1, 101), ferner enthaltend eine Steuerungseinrichtung (28) zur Steuerung der wenigstens einen Verarbeitungseinrichtung (2, 102; 3, 103; 4, 104; 5, 105; 6, 106) und Verstellmittel zur Anpassung von wenigstens einer Einflussgrösse zur Beeinflussung der Produkteinheiten an der wenigstens einen Verarbeitungseinrichtung (2, 102; 3, 103; 4, 104; 5, 105; 6, 106) an die unterschiedlichen Formate, zur Durchführung des Verfahrens nach einem der Ansprüche 1 bis 12,
wobei
die Steuerungseinrichtung (28) zur Ansteuerung der Verstellmittel zwecks Anpassung der wenigstens einen Einflussgrösse an ein neues Format ausgelegt ist, und dass die Auslegung der Steuerungseinrichtung (28) derart ist, dass die wenigstens eine Einflussgrösse bei einem Wechsel von einem bisherigen Format auf ein neues Format unter Aufrechterhaltung des Förderbetriebes verstellbar ist.

14. Verarbeitungsanlage nach Anspruch 13, **dadurch gekennzeichnet, dass** die Steuerungseinrichtung (28) eine der wenigstens einen Verarbeitungseinrichtung (2, 102; 3, 103; 4, 104; 5, 105) übergeordnete Anlagensteuerung enthält, welche dazu ausgelegt ist, Steuerdaten zur Anpassung der wenigstens einen Einflussgrösse an das Format der Produkteinheiten aufzubereiten und der wenigstens einen Verarbeitungseinrichtung (2, 102; 3, 103; 4, 104; 5, 105) zu übermitteln.

15. Verarbeitungsanlage nach Anspruch 13 oder 14, **dadurch gekennzeichnet, dass** die Steuerungseinrichtung (28) eine der wenigstens einen Verarbeitungseinrichtung (2, 102; 3, 103; 4, 104; 5, 105) übergeordnete Anlagensteuerung enthält, welche dazu ausgelegt ist, zwecks Anpassung wenigstens einer Einflussgrösse an einer Verarbeitungseinrichtung auf neue Formate eine durch die Verarbeitungsanlage (1, 101) führbare Fördergutlücke (122) zu erzeugen.

16. Verarbeitungsanlage gemäss einem der Ansprüche 13 bis 15, **dadurch gekennzeichnet, dass** die Verarbeitungsanlage (1, 101) eine Zusammentrageinrichtung enthält, in welcher Produkteinheiten (20) in Form von Kollektionen aus einzelnen zugeführten Produkten herstellbar sind.

## Claims

1. A method for the operation of a processing installation (1, 101), in which product units (20) with different product dimensions are processed, comprising at least one processing device (2, 102; 3, 103; 4, 104; 5, 105, 6, 106), as well as conveying means for conveying the product units (20) in the processing installation (1, 101), further comprising a control device (28) for the control of the at least one processing device (2, 102; 3, 103; 4, 104; 5, 105, 6, 106), and adjustment means for adapting at least one influencing variable for influencing the product units at the at least one processing device (2, 102; 3, 103; 4, 104; 5, 105, 6, 106), to the different product dimensions, wherein an adaptation of the at least one influencing variable to new product dimensions of a subsequent product unit is effected via the adjustment means with continued conveying operation, wherein the control device (28) produces a gap (122), which is moved through the processing installation (1, 101), wherein the adjustment means are controlled via the control device (28) in such a manner that the adaptation of the at least one influencing variable is effected when the gap in the conveyed products (122) passes that region in the processing device, in which the influencing variable exerts an influence on the passing product units,
**characterized in that**
the control device (28) determines the size of the gap (122) in the conveyed products in dependence on the conveying speed and the required changeover time of that influencing variable, with which most time is required for the changeover to the new product dimensions, so that the time for the passage of the gap (122) in the conveyed products through the related region, in which this influencing variable exerts an influence on the product units, is at least as long or longer than the associated changeover time.

2. A method according to claim 1, **characterised in that** the at least one influencing variable for influencing the product units is set to the product dimensions of a subsequent product unit amid the implementation of the following steps:
- feeding a last product unit (20) with old product dimensions into the processing installation (1, 101) or collating a last product unit (20) with old product dimensions in the processing installation (1, 101);
- feeding a first product unit (20) with new product dimensions into the processing installation (1, 101) or collating a first product unit (20) with new product dimensions in the processing installation (1, 101);
- producing a gap (122) in the conveyed products after the last product unit (20);
- moving the gap in the conveyed products through the processing installation (1, 101);
- adapting the at least one influencing variable for influencing the product units, to the new product dimensions of the subsequent first product unit via the adjustment means with continued conveying operation.

3. A method according to claim 1 or 2, **characterised in that** the gap in the conveyed products is created by way of the non-feeding or non-compiling of at least one product unit (20) and/or by way of discharging at least one product unit out of the processing installation (1, 101).

4. A method according to one of the claims 1 to 3, **characterised in that** information on the dimensions of the products to be processed of product units or the dimensions of the product units (20), is transferred to the control device (28) before the changeover.

5. A method according to one of the claims 1 to 4, **characterised in that** the control device (25), on the basis of the transferred product dimensions, generates control data, which is transferred to the at least one processing device (2, 102; 3, 103; 4, 104; 5, 105), in particular to a control unit of the processing device (2, 102; 3, 103; 4, 104; 5, 105), for the purpose of the changeover to the new product dimensions.

6. A method according to one of the claims 1 to 5, **characterised in that** a central installation control of the control device (28) assigns a data package to at least one cycle of the gap (122) in the conveyed products and this data package is led with this cycle through the processing installation to a control unit of the at least one processing device (2, 102; 3, 103; 4, 104; 5, 105), and the data package comprises control data or information, which is based on the dimensions of the product units, and the control unit uses the control data or information of the data package for the changeover to the new product dimensions.

7. A method according to one of the claims 4 to 6, **characterised in that** the control data or information correspond to the command variables for the adjustment means or to the output variables, i.e. the dimensions of the product units (20) or the products of product units, for computing the command variables.

8. A method according to one of the claims 1 to 7, **characterised in that** the product unit (20) is a collection of different products of varying dimensions, wherein the dimensions of the collection is defined by its maximal width, maximal length and maximal height, and the format of the collection is either computed from the dimensions of the individual products or by way of measurement of the dimensions of the collection, or a combination thereof.

9. A method according to one of the claims 1 to 8, **characterised in that** the difference between the preceding and the subsequent product dimensions is determined and is compared to a tolerance range for these dimensions, wherein for the dimensions:
a. no adjustment of the at least one influencing variable is carried out in the processing installation (1, 101) if the difference lies within the tolerance range; and
b. an adjustment of the at least one influencing value to the new product dimensions is carried out in the processing installation (1, 101) if the difference lies outside the tolerance range.

10. A method according to one of the claims 1 to 9, **characterised in that,** during the changeover of the at least one influencing variable to the new product dimensions in the processing installation (1, 101), the conveying speed is changed, in particular reduced, with respect to the nominal speed before and after the changeover.

11. A method according to one of the claims 1 to 10, **characterised by** the following steps:
- collating product units (20) from individual products, in a collation device (2, 102);
- conveying the product units (20) further to a packaging device (3, 103) and packaging the product units (3);
- conveying the packaged product units (20) further and carrying out a quality control in a control device (11);
- conveying the controlled product units (20) further to a delivery device (12) and creating a package unit from several product units (20).

12. A method according to one of the claims 1 to 11, **characterised in that** the influencing variable for influencing the product units corresponds to the geometry of a component arrangement in the processing device, and the adjustment means are controlled via the control device (28) in such a manner that the adaptation of the geometry of the component arrangement is effected during the passage of the gap in the conveyed products through the related component arrangement.

13. A processing installation (1, 101) for processing product units (20) with different product characteristics, comprising at least one processing device (2, 102; 3, 103; 4, 104; 5, 105, 6, 106) as well as conveying means for conveying the product units (20) in the processing installation (1, 101), further comprising a control device for the control of the at least one processing device (2, 102; 3, 103; 4, 104; 5, 105, 6, 106), and adjustment means for adapting at least one influencing variable for influencing the product units at the at least one processing device (2, 102; 3, 103; 4, 104; 5, 105, 6, 106), to the different product dimensions for carrying out the method according to one of the claims 1 to 12, wherein the control device (28) is designed for activating the adjustment means for the purpose of adapting the at least one influencing variable to new product dimensions, and that the design of the control device (28) is such that the at least one influencing variable can be adjusted with a change from previous product dimensions to new product dimensions, whilst maintaining conveying operation.

14. A processing installation according to claim 13, **characterised in that** the control device (28) comprises an installation control, which is superordinate to the at least one processing device (2, 102; 3, 103; 4, 104; 5, 105), and which is designed to process control data for adapting the at least one influencing variable to the product dimensions and transferring it to the at least one processing device (2, 102; 3, 103; 4, 104; 5, 105).

15. A processing installation according to claim 13 or 14, **characterised in that** the control device (28) comprises an installation control, which is superordinate to the at least one processing device (2, 102; 3, 103; 4, 104; 5, 105), and which is designed to produce a gap (122) in the conveyed products, which can be led through the processing installation (1, 10) for the purpose of the changeover of at least one influencing variable at a processing device, to new product dimensions.

16. A processing device according to one of the claims 13 to 15, **characterised in that** the processing installation (1, 101) comprises a collation device, in which product units (20) in the form of collections of individual, fed products can be created.

## Revendications

1. Procédé de conduite d'une installation de traitement (1, 101) dans laquelle des unités de produits (20) présentant des formats différents sont traitées, l'installation contenant
au moins un dispositif de traitement (2, 102; 3, 103; 4, 104; 5, 105; 6, 106) ainsi que des moyens de transport qui transportent les unités de produits (20) dans l'installation de traitement (1, 101) et
en outre, un dispositif de commande (28) qui commande le ou les dispositifs de traitement (2, 102; 3, 103; 4, 104; 5, 105; 6, 106) ainsi que des moyens d'ajustement qui adaptent au moins une grandeur d'action qui agit sur les unités de produits (20) sur au moins un dispositif de traitement (2, 102; 3, 103; 4, 104; 5, 105; 6, 106) aux différents formats des unités de produits (20),
une adaptation de la ou des grandeurs d'action à un nouveau format d'une unité de produits (20) qui suit s'effectuant par l'intermédiaire des moyens d'ajustement pendant que le transport se poursuit,
l'unité de commande (28) formant un interstice (122) entre les produits transportés, cet interstice étant déplacé par l'installation de traitement (1, 101),
les moyens d'ajustement étant commandés par le dispositif de commande (28) de telle sorte que l'adaptation de la ou des grandeurs d'action ait lieu lorsque l'interstice (122) entre les produits transportés traverse la partie du dispositif de traitement dans laquelle la grandeur d'action exerce une influence sur les unités de produits (20) qui la traversent, **caractérisé en ce que**
la taille de l'interstice (122) entre les produits transportés est définie par le dispositif de commande (28) en fonction de la vitesse de transport et du temps nécessaire pour modifier la grandeur d'action pour laquelle l'adaptation au niveau format est nécessaire la plupart du temps, de sorte que la durée nécessaire pour que l'interstice (122) entre les produits transportés traverse la partie concernée dans laquelle cette grandeur d'action exerce une influence sur les unités de produits soit au moins aussi longue ou plus longue que la durée de modification associée.

2. Procédé selon la revendication 1, **caractérisé en ce que** la ou les grandeurs d'action qui agissent sur les unités de produits sont adaptées au format d'une unité de produits qui suit en exécutant les étapes suivantes :
amenée ou rassemblement d'une dernière unité de produits (20) de l'ancien format dans l'unité de traitement (1, 101),
amenée ou rassemblement d'une première unité de produits (20) qui présente un nouveau format dans l'installation de traitement (1, 101),
formation d'un interstice (122) entre produits transportés après la dernière unité de produits (20),
avancement de l'interstice (122) entre les produits transportés dans l'installation de traitement (1, 101) et
adaptation de la ou des grandeurs d'action qui agissent sur les unités de produits au nouveau format de la première unité de produits qui suit, par les moyens d'ajustement et pendant que le transport se poursuit.

3. Procédé selon les revendications 1 ou 2, **caractérisé en ce que** l'interstice entre les produits transportés est formé par non-amenée ou non-rassemblement d'au moins une unité de produits (20) et/ou par expulsion d'au moins une unité de produits hors de l'installation de traitement (1, 101).

4. Procédé selon l'une des revendications 1 à 3, **caractérisé en ce qu'**avant la transformation, des informations concernant les formats des produits des unités de produits à traiter ou le format des unités de produits (20) sont transmises au dispositif de commande (28).

5. Procédé selon l'une des revendications 1 à 4, **caractérisé en ce que** le dispositif de commande (28) génère à partir des formats transmis des données de commande qui sont transmises au dispositif ou aux dispositifs de traitement (2, 102; 3, 103; 4, 104; 5, 105), en particulier à une unité de commande du dispositif de traitement (2, 102; 3, 103; 4, 104; 5, 105), pour le passage au nouveau format.

6. Procédé selon l'une des revendications 1 à 5, **caractérisé en ce qu'**une commande centrale d'installation du dispositif de commande (28) associe à au moins une cadence de l'interstice (122) entre produits transportés un paquet de données qui est amené à cette cadence de traversée de l'installation de traitement à une unité de commande du ou des dispositifs de traitement (2, 102; 3, 103; 4, 104; 5, 105) et **en ce que** le paquet de donnée contient des données de commande basées sur le format des unités de produits ou des informations, l'unité de commande utilisant les données de commande ou les informations du paquet de données pour passer au nouveau format.

7. Procédé selon l'une des revendications 4 à 6, **caractérisé en ce que** les données de commande ou informations correspondent aux grandeurs de guidage des moyens d'ajustement ou des grandeurs de sortie, à savoir les formats, des unités de produits (20) ou des produits d'unités de produits, pour le calcul des grandeurs de guidage.

8. Procédé selon l'une des revendications 1 à 7, **caractérisé en ce que** l'unité de produits (20) est une collection de différents produits de différents formats, le format de la collection étant défini par sa largeur maximale, sa longueur maximale et sa hauteur maximale, le format de la collection étant calculé à partir des formats des différents produits ou étant déterminé par mesure des formats de la collection, ou par une combinaison de ces opérations.

9. Procédé selon l'une des revendications 1 à 8, **caractérisé en ce que** la valeur de différence entre le format précédent et le format suivant est déterminée et est comparée à une plage de tolérance de format, tandis que pour le format :
a. aucune adaptation de la ou des grandeurs d'action n'est entreprise dans l'installation de traitement (1, 101) au cas où la valeur de différence est située à l'intérieur de la plage de tolérance et
b. une adaptation de la ou des grandeurs d'action au nouveau format est entreprise dans l'installation de traitement (1, 101) au cas où la valeur de différence est située à l'extérieur de la plage de tolérance.

10. Procédé selon l'une des revendications 1 à 9, **caractérisé en ce que** pendant l'adaptation de la ou des grandeurs d'action au nouveau format, la vitesse de transport dans l'installation de traitement (1, 101) est modifiée par rapport à la vitesse de consigne avant et après la modification, et est en particulier réduite.

11. Procédé selon l'une des revendications 1 à 10, **caractérisé par** les étapes suivantes :
rassemblement d'unités de produits (20) constituées de produits différents, dans un dispositif de rassemblement (2, 102),
poursuite du transport des unités de produits (20) vers un dispositif d'emballage (3, 103) et emballage des unités de produits (3),
poursuite du transport des unités de produits (20) emballés et exécution d'un contrôle de qualité dans un dispositif de contrôle (11) et
poursuite du transport des unités de produits (20) contrôlées vers un dispositif de sortie (12) et établissement d'une unité constituée de l'assemblage de plusieurs unités de produits (20).

12. Procédé selon l'une des revendications 1 à 11, **caractérisé en ce que** la grandeur d'action qui agit sur les unités de produits correspond à la géométrie d'un ensemble de composants dans le dispositif de traitement, par le dispositif de commande (28) de telle sorte que l'adaptation à la géométrie de l'ensemble de composants ait lieu pendant le passage de l'interstice entre produits transportés dans l'ensemble de composants concerné.

13. Installation de traitement (1, 101) destinée à traiter des unités de produits (20) présentant des formats différents, l'installation contenant au moins un dispositif de traitement (2, 102; 3, 103; 4, 104; 5, 105; 6, 106) ainsi que des moyens de transport qui transportent les unités de produits (20) dans l'installation de traitement (1, 101) et en outre un dispositif de commande (28) qui commande le ou les dispositifs de traitement (2, 102; 3, 103; 4, 104; 5, 105; 6, 106) ainsi que des moyens d'ajustement qui adaptent au moins une grandeur d'action qui agit sur les unités de produits sur le ou les dispositifs de traitement (2, 102; 3, 103; 4, 104; 5, 105; 6, 106) aux différents formats, en vue de la mise en oeuvre du procédé selon l'une des revendications 1 à 12, le dispositif de commande (28) étant conçu pour commander les moyens d'ajustement par adaptation de la ou des grandeurs d'action à un nouveau format et en ce que la conception du dispositif de commande (28) est telle que la ou les grandeurs d'action peuvent être ajustées en maintenant le transport lors d'un passage à un format actuel à un nouveau format.

14. Installation de traitement selon la revendication 13, **caractérisée en ce que** le dispositif de commande (28) contient une commande d'installation d'ordre hiérarchique supérieur au dispositif ou aux dispositifs de traitement (2, 102; 3, 103; 4, 104; 5, 105) et conçue pour délivrer des données de commande permettant l'adaptation de la ou des grandeurs d'action au format des unités de produits au dispositif ou aux dispositifs de traitement (2, 102; 3, 103; 4, 104; 5, 105).

15. Installation de traitement selon les revendications 13 ou 14, **caractérisée en ce que** le dispositif de commande (28) contient une commande d'installation d'ordre hiérarchique supérieur au dispositif ou aux dispositifs de traitement (2, 102; 3, 103; 4, 104; 5, 105) et conçue pour, dans le but d'une adaptation d'au moins une grandeur d'action d'un dispositif de traitement à de nouveaux formats, former un interstice (122) entre produits transportés qui peut être amené à traverser l'installation de traitement (1, 101).

16. Installation de traitement selon l'une des revendications 13 à 15, **caractérisée en ce que** l'installation de traitement (1, 101) contient un dispositif de rassemblement dans lequel des unités de produits (20) qui présentent la forme de collections de produits amenés séparément peuvent être formées.
